# EUROPEAN PATENT SPECIFICATION

(11) **EP 2 970 539 B1**
(45) Date of publication and mention of the grant of the patent: **02.01.2019**
(21) Application number: 14715488.4
(22) Date of filing: 10.03.2014
(51) Int. Cl.: C08F 265/06, C09D 133/08, C09D 7/65, C08F 292/00

(54) **HYBRID LATEX PARTICLES FOR SELF-STRATIFYING COATINGS**
HYBRIDE LATEXTEILCHEN FÜR SELBSTSTRATIFIZIERENDE BESCHICHTUNGEN
PARTICULES DE LATEX HYBRIDES POUR REVÊTEMENTS AUTOSTRATIFIANTS

(30) Priority: 14.03.2013 US 201313804193
(43) Date of publication of application: 20.01.2016
(73) Proprietor: The Sherwin-Williams Company, Cleveland, OH 44115 (US)
(72) Inventor: MACKULIN, Peter J., North Olmsted, OH 44070 (US); KRAFCIK, Randolph B., Aurora, OH 44202 (US)
(74) Representative: Dannenberger, Oliver Andre
(86) International application number: PCT/US2014/022271
(87) International publication number: WO 2014/159162

(56) References cited:
- CN-A- 101 845 124
- R. R. THOMAS ET AL: "Low Free Energy Surfaces Using Blends of Fluorinated Acrylic Copolymer and Hydrocarbon Acrylic Copolymer Latexes", MACROMOLECULES, vol. 33, no. 23, 1 November 2000 (2000-11-01), pages 8828-8841, XP055117184, ISSN: 0024-9297, DOI: 10.1021/ma000221p

## Description

### Field of the Invention

The present invention is directed to coating compositions comprising metal oxide hybrid latex particles which are self-stratifying or self-layering, and a method for forming such coating compositions. According to this invention, metal oxide nanoparticles are embedded within a hybrid latex particle in a self-stratifying latex composition. Such self-stratifying latex composition can be used as an additive to base latex resins for enhancing the washability, ultraviolet absorbance and other performance characteristics of a coating composition. R. R. THOMAS ET al. in "Low Free Energy Surfaces Using Blends of Fluorinated Acrylic Copolymer and Hydrocarbon Acrylic Copolymer Latexes", MACROMOLECULES, vol. 33, no. 23, 1 November 2000, pages 8828-8841 discloses phase segregated and stratifying coatings, in which blends of latexes can be used to deliver low free-energy fluorinated components to the surface.

### Summary of the Invention

Coatings according to the present invention as disclosed in the claims, comprise a base latex resin and a stratifying latex resin, wherein the stratifying latex is formulated with hybrid metal oxide latex particles. In accordance with this invention, the stratifying latex comprises hybrid metal oxide nanoparticles, wherein the metal oxide nanoparticles are embedded within the hybrid latex particle. The hybrid particles are the polymerization reaction product of at least one or more copolymerizable monoethylenically unsaturated monomers, wherein the monoethylenically unsaturated monomers comprise at least one low surface energy driver monomer selected from the group consisting of a fluorine-containing monomer and a silane-containing monomer and wherein the polymerization reaction is in the presence of metal oxide nanoparticles.

### Brief Description of the Drawings

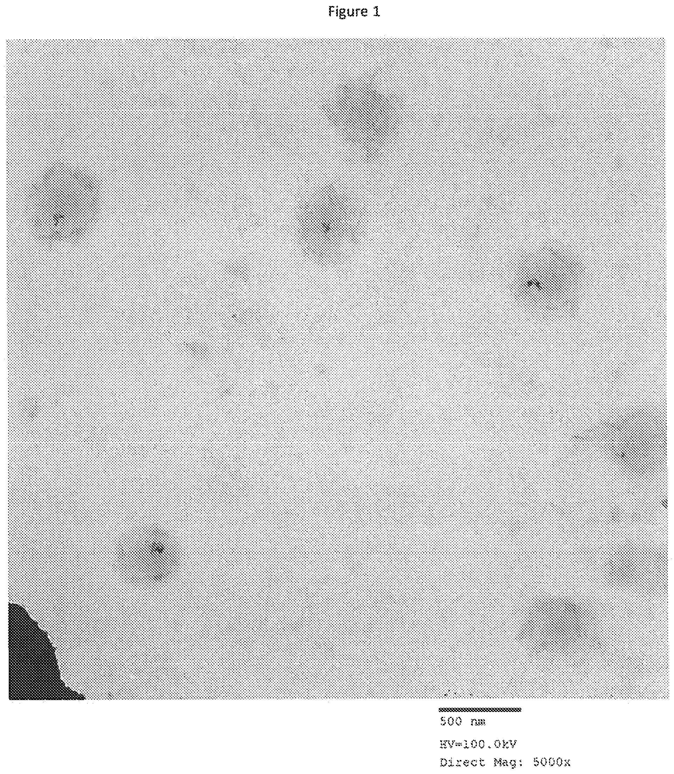

FIG. 1 is a transmission electron microscopy (TEM) image (1000x) of a hybrid TiO2 nanoparticle surrounded by the stratifying latex resin of this invention. As can be seen from the TEM image, the TiO2 nanoparticle hybrid of the present invention is comprised of particles 5-20 nanometers in size, embedded within hybrid latex particles.

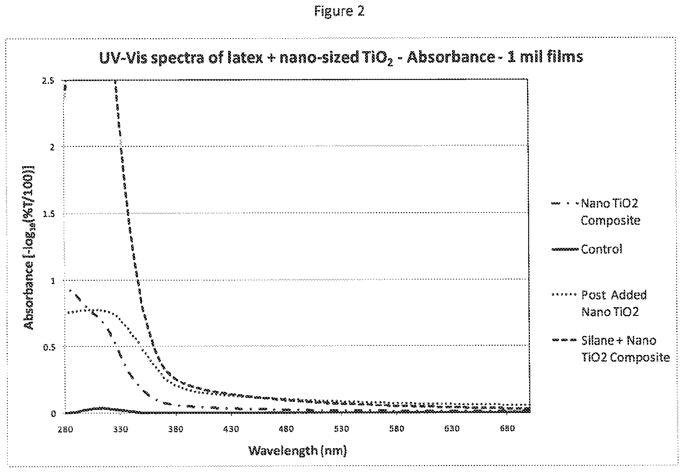

FIG. 2 is a UV-Vis absorbance spectra of the stratified latex coating composition of this invention, compared to a latex coating composition control and a coating composition with post-added TiO2 nanoparticles, all at 1 mil film thickness.

### Detailed Description of the Invention

The present invention comprises a coating composition including a base latex resin and a stratifying latex resin comprising hybrid latex particles of metal oxide nanoparticles embedded within a stratifying latex resin.

The hybrid particle of this invention are clusters of metal oxide nanoparticles that are embedded within a stratifying latex resin particle, that result from the polymerization of the starting nanoparticles in an aqueous dispersion with at least one stratifying latex monomer, such as a low energy driver monomer selected from the group consisting of a fluorine-containing monomer and a silane-containing monomer. As used herein, such hybrid metal oxide nanoparticles are also referred to as "hybrid metal oxide latex particles." Nanoparticles suitable for preparing the hybrid particles of this invention can be selected from metal oxides such as aluminum oxide, antimony tin oxide, bismuth oxide, cerium oxide, iron oxide titanium dioxide, zinc oxide, to name a few, and mixtures thereof. Such metal oxide nanoparticles are well-known and commercially available in a range of particle sizes and morphologies as aqueous dispersions.

Both the base latex and the stratifying latex include polymers polymerized from one or more suitable monomers. Typically, the resins are polymerized from one or more copolymerizable monoethylenically unsaturated monomers, such as, for example, vinyl monomers and/or acrylic monomers.

Vinyl monomers suitable for use in accordance with the polymers of the present invention include any compounds having vinyl functionality, i.e., ethylenic unsaturation, exclusive of compounds having acrylic functionality, e.g., acrylic acid, methacrylic acid, esters of such acids, acrylonitrile and acrylamides. In one embodiment of the invention, the vinyl monomers are selected from vinyl esters, vinyl aromatic hydrocarbons, vinyl aliphatic hydrocarbons, vinyl alkyl ethers and mixtures thereof.

Suitable vinyl monomers also include vinyl esters, such as, for example, vinyl propionate, vinyl laurate, vinyl pivalate, vinyl nonanoate, vinyl decanoate, vinyl neodecanoate, vinyl butyrates, vinyl benzoates, vinyl isopropyl acetates and similar vinyl esters; vinyl aromatic hydrocarbons, such as, for example, styrene, methyl styrenes and similar lower alkyl styrenes, chlorostyrene, vinyl toluene, vinyl naphthalene and divinyl benzene; vinyl aliphatic hydrocarbon monomers, such as, for example, vinyl chloride and vinylidene chloride as well as alpha olefins such as, for example, ethylene, propylene, isobutylene, as well as conjugated dienes such as 1,3 butadiene, methyl-2-butadiene, 1,3-piperylene, 2,3-dimethyl butadiene, isoprene, cyclohexene, cyclopentadiene, and dicyclopentadiene; and vinyl alkyl ethers, such as, for example, methyl vinyl ether, isopropyl vinyl ether, n-butyl vinyl ether, and isobutyl vinyl ether.

The acrylic monomers suitable for use in accordance with the polymers of the present invention comprise any compounds having acrylic functionality. Acrylic monomers may be selected from the group consisting of alkyl acrylates, alkyl methacrylates, acrylate acids and methacrylate acids as well as aromatic derivatives of acrylic and methacrylic acid, acrylamides and acrylonitrile. In one useful embodiment, the alkyl acrylate and methacrylic monomers (also referred to herein as "alkyl esters of acrylic or methacrylic acid") may have an alkyl ester portion containing from 1 to about 12, for example about 1 to 5, carbon atoms per molecule.

Suitable acrylic monomers include, for example, methyl acrylate and methacrylate, ethyl acrylate and methacrylate, butyl acrylate and methacrylate, propyl acrylate and methacrylate, 2-ethyl hexyl acrylate and methacrylate, cyclohexyl acrylate and methacrylate, decyl acrylate and methacrylate, isodecyl acrylate and methacrylate, benzyl acrylate and methacrylate, isobornyl acrylate and methacrylate, neopentyl acrylate and methacrylate, 1-adamantyl methacrylate and various reaction products such as butyl, phenyl, and cresyl glycidyl ethers reacted with acrylic and methacrylic acids, hydroxyl alkyl acrylates and methacrylates such as hydroxyethyl and hydroxypropyl acrylates and methacrylates, amino acrylates, methacrylates as well as acrylic acids such as acrylic and methacrylic acid, ethacrylic acid, alpha-chloroacrylic acid, alpha-cyanoacrylic acid, crotonic acid, beta-acryloxy propionic acid, and beta-styryl acrylic acid.

In addition to the specific monomers described above, those skilled in the art will recognize that other monomers such as, for example, allylic monomers, or monomers which impart wet adhesion, e.g., methacrylamidoethyl ethylene urea, can be used in place of, or in addition to, the specifically described monomers in the preparation of the polymers used in the present invention. Further details concerning such other monomers suitable for copolymerization in accordance with the present invention are known to those skilled in the art. The amount of such other monomers is dependent on the particular monomers and their intended function, which amount can be determined by those skilled in the art.

Polymer resins used in the present invention may also comprise acid functional latexes. Specific acid functional monomers suitable for use in accordance with polymers of the present invention include, for example, acrylic acid, methacrylic acid, ethacrylic acid, itaconic acid, maleic acid, dimeric acrylic acid or the anhydrides thereof. Besides carboxylic acids and anhydrides, monomers possessing other acid groups such as sulfonic or phosphoric acid groups are also useful. Representative monomers include ethylmethacrylate-2-sulfonic acid, 2-acrylamido-2-methylpropane sulfonic acid, 2-methyl-2-propenoic acid ethyl-2-phosphate ester (HEMA-phosphate), (1-phenylvinyl)-phosphonic acid, or (2-phenylvinyl)-phosphonic acid. Mixtures of acids are also practical.

Polymers of the present invention may also have "latent crosslinking" capabilities, which as used herein means a monomer which possesses the ability to further react some time after initial formation of the polymer. Activation can occur through the application of energy, e.g., through heat or radiation. Also, drying can activate the crosslinking polymer through changes in pH, oxygen content or other changes that causes a reaction to occur. The particular method of achieving crosslinking in the binder polymer is not critical to the present invention. A variety of chemistries are known in the art to produce crosslinking in latexes.

Representative examples of latent crosslinking monomers are those which contain hydrolyzable organosilicon bonds. Examples are the copolymerizable monomers methacryloyloxy-propyl-tri-methoxy-silane, methacryloyloxy-propyl-tri-ethoxy-silane, methacryloyloxy-propyl-tri-propoxy-silane, vinyl-tri-methoxy-silane, vinyl-tri-ethoxy-silane, vinyl-iso-propoxy-silane, gamma-amino-triethoxy-silane, cyclo-aliphatic epoxy-tri-methoxy-silane, and gamma-methacryloxy-propyl-tri-methoxy-silane. The silane functionality of polymers incorporating these monomers are capable of reacting with moisture for the crosslinking reaction. Additional latent crosslinking monomers include carbonyl-containing monomers such as acrolein, methacrolein, diacetone acrylamide, diacetone methacrylamide, 2-butanone methacrylate, formyl styrol, diacetone acrylate, diacetone methacrylate, acetonitrile acrylate, acetoacetoxyethyl methacrylate, acetoacetoxyethyl acrylate and vinylaceto acetate. These monomers normally do not affect crosslinking until during final film formation. In some embodiments, the aqueous polymer emulsion may simultaneously contain an appropriate added amount of a reactive material such as a polyamine compound as crosslinker for the latent crosslinking functionality. Particularly suitable compounds of this type are the dihydrazides and trihydrazides of aliphatic and aromatic dicarboxylic acids of 2 to 20 carbon atoms. Polyamine compounds useful as crosslinkers for the carboxyl functional groups include those having an average of at least two carbonyl-reactive groups of the formula - NH₂ and carbonyl reactive groups derived from such groups. Examples of useful amine functional groups include R-NH₂, R-O-NH₂, R-O-N=C<, R-NH-C(=O)-O- NH₂, wherein R is alkylene, alicyclic or aryl and may be substituted. Representative useful polyamines include ethylene diamine, isophorone diamine, diethylenetriamine and dibutylenetriamine. In one embodiment of this invention it is useful to utilize polyhydrazides as the polyamine compounds. Representative useful polyhydrazides include oxalic dihydrazide, adipic dihydrazide, succinic dihydrazide, malonic dihydrazide, glutaric dihydrazide, phthalic or terephthalic dihydrazide and itaconic dihydrazide. Additionally, water-soluble hydrazines such as ethylene-1,2-dihydrazine, propylene-1,3-dihydrazine and butylene-1,4-dihydrazine can also be used as one of the crosslinking agents.

Epoxy-, hydroxyl- and/or N-alkylol-containing monomers, for example, glycidyl acrylate, N-methylolacrylamide and -methacrylamide and monoesters of dihydric alcohols with α,β-monoethylenically unsaturated carboxylic acids of 3 to 6 carbon atoms, such as hydroxyethyl, hydroxy-n-propyl or hydroxy-n-butyl acrylate and methacrylate are also suitable for postcrosslinking. Primary or secondary amino containing acrylates or methacrylates such as t-butyl amino ethyl methacrylate are also suitable.

Preparation of latex compositions is well known in the paint and coatings art. Any of the well known free-radical emulsion polymerization techniques used to formulate latex polymers can be used in the present invention. Such procedures include, for example, single feed, core-shell, and inverted core-shell procedures which produce homogeneous or structured particles. In one embodiment of the present invention, one or both of the resins may comprise a single polymer formed from a mix of monomers as described herein. In another useful embodiment, one or both of the resins may comprise a combination of two polymers. Combinations of two polymers may be included in coating compositions as a blend of preformed (separately prepared) polymers, or as a sequentially-formed composition of the polymers, whereby one polymer has been prepared in the presence of another, preformed, polymer. As used herein "two-stage polymer" refers to an overall polymer where one polymer is formed in the presence of another, preformed, polymer. Without being limited to any particular theory, this polymerization process possibly, but not necessarily, results in the two polymers having a core/shell particle arrangement. In some two-stage polymers, the two polymer segments will have different Tg's. In such cases, one stage may be referred to as the hard segment (higher Tg), while the other stage is referred to as the soft segment (lower Tg). The term Tg means polymer glass transition temperature.

A crosslinker for reaction with the latent crosslinking functionality may be added to coating compositions of the present invention. The crosslinker need only be present in an amount necessary to achieve the desired degree of cure. For many applications, the crosslinker will typically be present at a level to provide at least 0.1 equivalent for each equivalent of latent crosslinking functionality.

In one of the embodiments of this invention, the crosslinker would be present at a level to provide between about 0.2 to about 2.0 equivalents for each equivalent of latent crosslinking functionality. In some useful embodiments the crosslinker will be present at a level to provide 0.4 to about 1.2 equivalents for each equivalent of latent crosslinking functionality. In another useful embodiment the crosslinker would be present at a level to provide about 0.4 to about 1.0 equivalent for each equivalent of latent crosslinking functionality.

While the polymers used in the base latex and the stratifying latex are formed from similar monomers as described above, the stratifying latex further comprises one or more "drivers" which serve to promote migration of the stratifying latex to the surface of the coating or to an interfacial layer within the coating composition during curing or drying. One such driver comprises including a low surface energy group in the polymer. The low surface energy group aids in creating surface energy differences between the base polymer and the stratifying resin. The low surface energy group may also be used to create surface energy differences between the two stages in the two stage polymer. One type of low surface energy group comprises semi-fluorinated groups. In one useful embodiment of the invention, a fluorinated monomer having the formula: 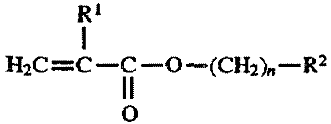 in which R¹ represents CH₃ or H; R² represents a perflourinated C₁-C₁₀ alkyl radical; and n≤4 is used in forming the stratifying resin for use in the present invention. Examples of such monomers include, but are not limited to 2,2,2-trifluoroethyl acrylate, 2,2,2-trifluoroethyl methacrylate, 2,2,3,3-tetrafluoropropyl acrylate, 1H,1H,5H-octafluoropentyl acrylate, and 1H,1H,5H-octafluoropentyl methacrylate. In one useful embodiment, the low surface energy group allows a layer to form in the coating at an interface between two layers of coatings. In another useful embodiment, the low surface energy group may be an air-philic group, which aids the stratifying resin in going to the surface of the coating that is exposed to the air.

According to one embodiment, the low surface energy group may contain a silane group such as those previously identified for the base latex composition. Examples are the copolymerizable monomers methacryloyloxy-propyl-tri-methoxy-silane, methacryloyloxy-propyl-tri-ethoxy-silane, methacryloyloxy-propyl-tri-propoxy-silane, vinyl-tri-methoxy-silane, vinyl-tri-ethoxy-silane, vinyl-iso-propoxy-silane, gamma-amino-triethoxy-silane, cyclo-aliphatic epoxy-tri-methoxy-silane, and gamma-methacryloxy-propyl-trimethoxy silane. Commercially available (meth)acrylated alkoxysilanes useful for this invention include CoatOSil® silanes, available from Momentive Performance Materials, Geniosil silanes from Wacker, and Z-type silanes from Dow Corning.

In one useful embodiment, the stratifying resin comprises 0.2% to 20%, for example, 0.5% to 16%, further for example, up to 8 %, by weight based on the total monomer weight, of a monomer containing a fluorine-containing monomer, or a silane-containing monomer, or both.

Another driver useful in the stratifying resin of the present invention is the incorporation of a long chain acrylate monomer having an alkyl length of at least twelve, for example lauryl methacrylate. In one useful embodiment, the stratifying resin comprises 1% to 5%, for example, 2% to 5%, by weight based on the total monomer weight, of a long chain acrylate monomer having an alkyl length of at least 12.

According to this invention, the stratifying resin comprises a metal oxide nanoparticle, wherein the nanoparticle acts as a seed in the emulsion polymerization with the stratifying monomers to form a hybrid metal oxide latex particle. In such an embodiment, the metal oxide nanoparticle would be part of the core of a two-stage polymer. The hybrid metal oxide latex particle is the polymerization reaction product of at least one or more copolymerizable monoethylenically unsaturated monomers, wherein the monoethylenically unsaturated monomers comprise at least one low surface energy driver monomer selected from the group consisting of a fluorine containing monomer and a silane-containing monomer; and wherein the polymerization reaction is in the presence of the metal oxide nanoparticle, and the nanoparticle becomes embedded within the hybrid particle. In one embodiment, the metal oxide nanoparticles diameters less than 100 nm or less and are dispersed in water. Nanoparticles suitable for preparing the hybrid particles of this invention can be selected from metal oxides such as aluminum oxide, antimony tin oxide, bismuth oxide, cerium oxide, iron oxide, zinc oxide, to name a few. For example, commercially available aqueous dispersions of metal oxide nanoparticles useful for this invention can include, but not limited to, Hombitec RM300wp nonphotocatalytic TiO2 nano water dispersion from Sachtleben Chemie GmbH, TRAFe CSB101W yellow transparent iron oxide water dispersion, commercially available from Chemsfield Co. Ltd., Nanobyk LP-X21530 photocatalytic grade TiO2 nano water dispersion, commercially available from Byk Chemie, and Nanobyk 3810 CeO2 nano water dispersion, commercially available from Byk Chemie.

In one useful embodiment of the present invention, the stratifying latex comprises a two-stage polymer where the lower Tg segment (the "softer" polymer) is the core in the core/shell particle arrangement while the higher Tg material (the "harder" polymer) is the shell. In another useful embodiment, one or more of the fluorine-containing and/or silane-containing drivers as described herein is contained in the softer core segment of such a polymer. In another embodiment, the metal oxide hybrid particles are embedded within the lower Tg "softer" polymer. In yet another embodiment, the hard shell segment is polymerized from a mix of monomers substantially or totally free of any stratification drivers, including fluorinated monomers or lauryl methacrylate. It should be understood that this is included by way of example only and is not intended to exclude the use of an opposite core/shell arrangement in the present invention or the inclusion of one or more drivers on either segment of the two-stage polymer. In one embodiment of the present invention, the soft segment has a Tg of -35°C to 10°C while the hard segment has a Tg from 35°C to 100°C. Without being limited to any particular theory, it is believed that the soft-segment containing the metal oxide hybrid particles of the stratifying resin is able to percolate to the surface of the coating.

In one embodiment of the present invention, the average particle size of the hybrid latex particles is between 75nm to 500nm, or 2 to about 100 times the average particle size of the nanoparticles, as measured by using a transmission electron microscope (TEM). In one such embodiment, the stratifying latex resin particles have smaller average particle size than the base latex. Without being bound by any particular theory, it is believed that the smaller particles may also facilitate stratification by being squeezed to the surface of the coating as the larger base latex particles cure.

The stratification drivers disclosed herein could each be used individually or could be used together in any combination to promote the formation of layers within the coating film.

To form a coating composition the base latex and the stratifying latex are combined. The base latex may be selected from any latexes capable of coalescence. Coalescence is the formation of a film by resin or polymer particles upon the evaporation of water or solvent from an emulsion or latex system, which permits contact and fusion of adjacent particles The coating composition may comprise 2.5% to 95% by weight, based on the total polymer solids, stratifying latex. For example, for some applications the coating composition may contain 10% to 25% by weight, based on the total polymer solids, stratifying latex. In other exemplary embodiments, the coating composition may contain 25% to 50%, for example 30% to 40% by weight, based on the total polymer solids, stratifying latex. In some embodiments, the components of the coating composition of the present invention separate during curing or drying to form layers of macroscopically measurable proportions. As such, the base latex and stratifying latex may be formulated to provide desired characteristics to each coating layer. For example, the latexes may be formulated to separate to provide the benefits of a base coat/clear coat system in a single coating composition. In order to achieve stratification, at least a portion of the base latex must have a higher surface tension than the stratifying latex.

In addition to the base latex and the stratifying latex resins, coating compositions in accordance with the present invention may also comprise various pigments, e.g. color pigments, corrosion inhibiting pigments, UV absorbers, hindered amine light stabilizers, plasticizers, rheology modifiers, specialty co-polymers, dispersants, surfactants, defoamers and other additives.

The following examples are presented to illustrate specific embodiments and practices of the present invention to allow a more complete understanding of the invention. Unless otherwise stated "parts" means parts-by-weight and "percent" is percent-by-weight. Unless otherwise noted, the polymers of Examples 1- 4 may be prepared by the following procedure: the components of the Charge mixture are added to the reaction vessel under a nitrogen blanket. The polymerization reactions may be carried out at 80°C to 85°C ±2°C. 0 to 10% of Pre-emulsion #1 may be added to the Charge mixture. Next the Seed Initiator may be added to the reaction vessel. Then, the rest of Pre-emulsion #1 and Initiator #1 may be added to the reaction vessel simultaneously over 1-3 hours. The reaction may then be held at about 80°C to about 85°C for about 30 - 60 minutes. For single stage latexes, the next step is cooling for the addition of the Chase Oxidizer and Chase Reducer. For two stage latexes, Pre-emulsion #2 and Initiator #2 may then be added to the reaction vessel simultaneously over 1-3 hours and reaction held at about 80°C to about 85°C for about 45 to about 120 minutes. For both single stage and two-stage latexes, the vessel may then be cooled to about 65°C and the Chase Oxidizer and Chase Reducer may be added over about 30 minutes and then held for about 30-60 minutes at about 60-65°C. The vessel may be cooled to below about 40°C and the Adjustment is added. The Charge Surfactant and PE Surfactant #1, in each case, is an anionic phosphate ester ethoxylated surfactant, which may be selected from TRYFAC™ surfactant from Cognis, RHODAFAC™, RS Series or RE Series, or SOPROPHOR™ surfactants from Rhodia, DEXTROL™ or STRODEX™ surfactants from Aqualon, T-MULZ™ surfactant from Harcros, or anionic sulfate esters ethoxylated surfactants selected from DISPONIL™ surfactant from Cognis, RHODAPEX™ or ABEX™ surfactants from Rhodia, or TDA or 23E sulfates from Sasol. PE Surfactant #1 can optionally be the same as PE Surfactant #2, a nonionic ethyoxylated alcohol surfactant which may be selected from, for example, commercially available IGEPAL, SOPROPHOR and RHODASURF from Rhodia, NOVEL TDA and NOVEL 23 from Sasol, POLYSTEP TD, POLYSTEP F AND POLYSTEP TSP from Stepan and DISPONIL AND TRYCOL from Cognis. Buffer, in each case, may be selected from 26% aqueous ammonia solution, sodium carbonate, or sodium bicarbonate. Defoamer, in each case, may be selected from Byk's defoamer line, Cognis' FOAMMASTER™ line, or Emerald Specialities FOAMBLAST™ line. EXAMPLE 1

A representative stratifying latex comprising TiO2 nanoparticle hybrid particles may be prepared as follows:

### EXAMPLE 1

A representative stratifying latex comprising TiO2 nanoparticle hybrid particles may be prepared as follows:

| **Component** | **Percent by weight** |
|---|---|
| **Charge** | |
| DI Water | 25.5 |
| Surfactant | 0.1 |
| TiO2 Nanoparticle | 4.25 |
| Surfactant #2 | 0.22 |

| **Pre-emulsion #1** | |
|---|---|
| DI Water | 8.88 |
| PE Surfactant #1 | 0.65 |
| PE Surfactant #2 | 0.26 |
| Buffer | 0.34 |
| Methacrylic Acid | 0.28 |
| Methacryl-functional silane | 0.86 |
| Lauryl Methacrylate | 1.01 |
| Methyl Methacrylate | 6.67 |
| 2,2,2 Trifluoroethyl Methacrylate | 1.61 |
| 2-Ethylhexyl acrylate | 13.03 |
| Dodecyl mercaptan | 0.01 |

| **Seed Initiator** | |
|---|---|
| DI Water | 0.72 |
| Ammonium Persulfate | 0.09 |

| **Oxidizer** | |
|---|---|
| DI Water | 3.24 |
| Ammonium Persulfate | 0.07 |

| **Pre-emulsion #2** | |
|---|---|
| DI Water | 7.84 |
| PE Surfactant #1 | 0.32 |
| PE Surfactant #2 | 0.26 |
| Buffer | 0.14 |
| Methacrylic Acid | 0.10 |
| Methacryl-functional silane | 0.86 |
| Methyl Methacrylate | 13.9 |
| 2-Ethyl Hexyl Acrylate | 1.0 |
| DI Water Line Rinse | 1.01 |

| **Initiator #2** | |
|---|---|
| DI Water | 2.44 |
| Ammonium Persulfate | 0.04 |

| **Chase Oxidizer** | |
|---|---|
| DI water | 0.76 |
| t-Butyl Hydroperoxide | 0.07 |

| **Chase Reducer** | |
|---|---|
| DI water | 0.97 |
| Reducing agent | 0.09 |

| **Adjustment** | |
|---|---|
| DI Water | 2.01 |
| Buffer | 0.20 |
| Biocide | 0.23 |
| Defoamer | 0.01 |

A latex prepared according to the above could have a theoretical Tg of -17°C(core)/87°C(shell), a particle size of 130nm, a viscosity of 88.0 cps and a weight percent solids of 42%.

### EXAMPLE 2

A representative stratifying latex comprising TiO2 nanoparticle hybrid particles may be prepared as follows:

| | |
|---|---|
| **Component** | **Percent by weight** |

| **Charge** | |
|---|---|
| DI Water | 25.92 |
| Surfactant #1 | 0.10 |
| TiO2 Nanoparticle | 4.32 |
| Surfactant #2 | 0.22 |

| **Pre-emulsion #1** | |
|---|---|
| DI Water | 9.04 |
| PE Surfactant #1 | 0.67 |
| PE Surfactant #2 | 0.26 |
| Buffer | 0.35 |
| Methacrylic Acid | 0.28 |
| Lauryl Methacrylate | 1.02 |
| Methyl Methacrylate | 6.79 |
| 2,2,2 Trifluoroethyl Methacrylate | 1.64 |
| 2-Ethylhexyl acrylate | 13.26 |
| Dodecyl mercaptan | 0.01 |

| Seed Initiator | |
|---|---|
| DI Water | 0.73 |
| Ammonium Persulfate | 0.01 |

| **Oxidizer** | |
|---|---|
| DI Water | 3.30 |
| Ammonium Persulfate | 0.07 |

| **Pre-emulsion #2** | |
|---|---|
| DI Water | 7.98 |
| PE Surfactant #1 | 0.32 |
| PE Surfactant #2 | 0.26 |
| Buffer | 0.15 |
| Methacrylic Acid | 0.10 |
| Methyl Methacrylate | 14.14 |
| 2-Ethyl Hexyl Acrylate | 1.02 |
| DI Water Line Rinse | 1.02 |

| **Initiator #2** | |
|---|---|
| DI Water | 2.48 |
| Ammonium Persulfate | 0.04 |

| **Chase Oxidizer** | |
|---|---|
| DI water | 0.77 |
| t-Butyl Hydroperoxide | 0.07 |

| **Chase Reducer** | |
|---|---|
| DI water | 0.99 |
| Reducing agent | 0.09 |

| **Adjustment** | |
|---|---|
| DI Water | 2.04 |
| Buffer | 0.20 |
| Biocide | 0.23 |
| Defoamer | 0.01 |

### EXAMPLE 3

A representative stratifying latex comprising CeO2 nanoparticle hybrid particles may be prepared as follows:

| **Component** | **Percent by weight** |
|---|---|
| **Charge** | |
| DI Water | 25.5 |
| Surfactant | 0.1 |
| CeO2 Nanoparticle | 4.25 |
| Surfactant #2 | 0.22 |

| **Pre-emulsion #1** | |
|---|---|
| DI Water | 8.88 |
| PE Surfactant #1 | 0.65 |
| Surfactant #2 | 0.26 |
| Buffer | 0.34 |
| Methacrylic Acid | 0.28 |
| Methacryl-functional silane | 0.86 |
| Lauryl Methacrylate | 1.01 |
| Methyl Methacrylate | 6.67 |
| 2,2,2 Trifluoroethyl Methacrylate | 1.61 |
| 2-Ethylhexyl acrylate | 13.03 |
| Dodecyl mercaptan | 0.01 |

| **Seed Initiator** | |
|---|---|
| DI Water | 0.72 |
| Ammonium Persulfate | 0.09 |

| **Oxidizer** | |
|---|---|
| DI Water | 3.24 |
| Ammonium Persulfate | 0.07 |

| **Pre-emulsion #2** | |
|---|---|
| DI Water | 7.84 |
| PE Surfactant #1 | 0.32 |
| PE Surfactant #2 | 0.26 |
| Buffer | 0.14 |
| Methacrylic Acid | 0.10 |
| Methacryl-functional silane | 0.86 |
| Methyl Methacrylate | 13.9 |
| 2-Ethyl Hexyl Acrylate | 1.0 |
| DI Water Line Rinse | 1.01 |

| **Initiator #2** | |
|---|---|
| DI Water | 2.44 |
| Ammonium Persulfate | 0.04 |

| **Chase Oxidizer** | |
|---|---|
| DI water | 0.76 |
| t-Butyl Hydroperoxide | 0.07 |

| **Chase Reducer** | |
|---|---|
| DI water | 0.97 |
| Reducing agent | 0.09 |

| **Adjustment** | |
|---|---|
| DI Water | 1.78 |
| Buffer | 0.20 |
| Biocide | 0.23 |
| Defoamer | 0.01 |

A latex prepared according to the above could have a theoretical Tg of -15C°(core)/85°C(shell), a particle size of 240nm, a viscosity of 88 cps and a weight percent solids of 42%.

### EXAMPLE 4

A representative single stage base latex may be prepared as follows:

| **Component** | **Parts by weight** |
|---|---|
| **Charge** | |
| DI Water | 359 |
| Surfactant #1 | 0.8 |
| Ammonium Persulfate | 0.8 |
| Buffer | 0.2 |

| **Pre-emulsion #1** | |
|---|---|
| DI Water | 148.7 |
| PE Surfactant #1 | 7 |
| PE Surfactant #2 | 7.2 |
| Buffer | 2 |
| Methacrylic Acid | 7.2 |
| 2-Ethyl Hexyl Acrylate | 164.7 |
| Methyl Methacrylate | 28.4 |
| Styrene | 187.8 |
| Wet adhesion monomer | 16.5 |

| **Initiator #1** | |
|---|---|
| DI Water | 42.3 |
| Ammonium Persulfate | 0.8 |

| **Chase Oxidizer** | |
|---|---|
| DI water | 8.5 |
| t-Butyl Hydroperoxide | 0.6 |

| **Chase Reducer** | |
|---|---|
| DI water | 8.5 |
| Isoascorbic Acid | 0.4 |
| Buffer | 0.2 |

| **Adjustment** | |
|---|---|
| DI Water | 1.3 |
| Buffer | 5.3 |
| Biocide | 2 |

The resulting latex has a theoretical Tg of 16°C.

### EXAMPLE 5

An exemplary paint composition may be made by mixing the following

| **Material** | **Parts by weight** |
|---|---|
| Grind | |
| Water | 13.52 |
| Aqueous ammonia | 0.32 |
| Rheology modifier¹ | 1.26 |
| Dispersant² | 0.65 |
| Surfactant³ | 0.29 |
| Dispersant⁴ | 0.31 |
| Titanium dioxide⁵ | 14.79 |

| Let Down | |
|---|---|
| Stratifying latex of Example 1 or 2 or 3 | 16.27 |
| Base latex of Example 3 | 48.81 |
| Propylene glycol | 1.80 |
| Glycol ether DPnB | 0.74 |
| Propylene glycol phenyl ether | 0.43 |
| Plasticizer⁶ | 0.42 |
| Rheology modifier⁷ | 0.39 |

| | |
|---|---|
| ¹ Acrysol RM2020 rheology modifier from Dow. ² TAMOL 165-A dispersant from Dow. ³ TRITON CF-10 surfactant from Dow. ⁴ BYK 024 dispersant from Byk. ⁵ R-706 TiO₂ from DuPont. ⁶ BenzoFlex B50 plasticizer from Genovique Specialities. ⁷ Acrysol RM825 rheology modifier from Dow. | |

## Claims

1. An aqueous coating composition comprising:
(a) a base latex resin; and
(b) a stratifying latex resin comprising hybrid metal oxide latex particles wherein the hybrid particles are the polymerization reaction product of at least one or more copolymerizable monoethylenically unsaturated monomers, wherein the monoethylenically unsaturated monomers comprise at least one low surface energy driver monomer selected from the group consisting of (i) a fluorine containing monomer; and (ii) a silane-containing monomer; and wherein the polymerization reaction is in the presence of a metal oxide nanoparticle; and wherein the metal oxide nanoparticle is embedded within the hybrid particles.

2. The aqueous coating composition of claim 1, wherein the coating composition comprises 2.5% to 95% by weight stratifying resin, preferably 25% to 50% by weight stratifying resin, or 25 to 35% by weight stratifying resin, based on the total polymer solids weight.

3. The aqueous coating composition of claim 1 or 2, wherein the at least one fluorine containing monomer has the formula: 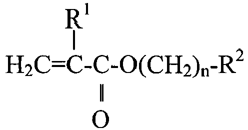 in which R¹ represents CH₃ or H; R² represents a perfluorinated C₁-C₁₀ alkyl radical; and n≤4.

4. The aqueous coating composition of claim 1, 2 or 3, further comprising at least one monomer having latent crosslinking functionality, said latent crosslinking monomer preferably being a silane monomer or a carbonyl-containing monomer.

5. The aqueous coating composition of claim 1, 2, 3 or 4, wherein the metal oxide nanoparticle is selected from the group consisting of aluminum oxide, antimony tin oxide, bismuth oxide, cerium oxide, iron oxide, titanium dioxide, zinc oxide and mixtures thereof.

6. The aqueous coating composition of any one of claims 1 to 5, wherein the stratifying latex resin further comprises at least one long chain acrylate monomer having an alkyl length of at least 12.

7. The aqueous coating composition of claim 1, wherein the stratifying latex resin comprises the polymerization reaction product of:
(a) 2% to 24% by weight based on the total monomer weight of a fluorine containing monomer;
(b) 2% to 6% by weight based on the total monomer weight of a monomer having silane functionality; and
(c) 1% to 5% by weight based on the total monomer weight of a long chain acrylate monomer having an alkyl length of at least 12.

8. The aqueous coating composition of any one of claims 1 to 7, wherein the stratifying latex resin is a two-stage polymer formed by sequentially polymerizing a first group of monomers to form a first stage polymer and a second group of monomers to form a second stage polymer.

9. The aqueous coating composition of claim 8, wherein the two-stage polymer comprises a soft segment having a Tg from -35°C to 10°C and a hard segment having a Tg from 35°C to 100°C.

10. The aqueous coating composition of claim 9, wherein the first stage polymer is the soft segment, or wherein the metal oxide hybrid particles are embedded within the soft segment.

11. The aqueous coating composition of claim 6, wherein the soft segment comprises the polymerization reaction product of:
(a) 2% to 12% by weight based on the total monomer weight of a fluorine containing monomer;
(b) 2 to 6% by weight based on the total monomer weight of a monomer having silane functionality; and
(c) 1 to 5% by weight based on the total monomer weight of a long chain acrylate monomer having an alkyl length of at least 12.

12. The aqueous coating composition of claim 9, wherein the hard segment comprises the polymerization reaction product of one or more copolymerizable monoethylenically unsaturated monomers excluding fluorine containing monomers and long chain acrylate monomers having an alkyl length of at least 12.

13. The aqueous coating composition of claim 4, wherein the at least one monomer having latent crosslinking functionality is selected from acrolein, methacrolein, diacetone acrylamide, diacetone methacrylamide, 2-butanone methacrylate, formyl styrol, diacetone acrylate, diacetone methacrylate, acetonitrile acrylate, acetoacetoxyethyl methacrylate, acetoacetoxyethyl acrylate, and vinylaceto acetate, or wherein the at least one monomer having latent crosslinking functionality is selected from the group consisting of methacryloyloxypropyltrimethoxysilane, methacryloyloxypropyltriethoxysilane, methacryloyloxypropyltripropoxysilane, vinyltrimethoxysilane, vinyltriethoxysilane, vinylisopropoxysilane, gamma-amino triethoxy silane, cycloaliphatic epoxide trimethoxy silane, and gamma-methacryloxy propyl trimethoxy silane.

14. The aqueous coating composition of claim 4 or 13, further comprising:
an effective crosslinking amount of a crosslinking agent for the stratifying resin, wherein the crosslinking agent preferably is selected from di and poly amines, di and poly hydrazides, and di and poly hydrazines, and mixtures thereof.

15. The aqueous coating composition of any one of claims 1 to 14, wherein the hybrid latex particles have an average particle size of between 75 nm to 500 nm, as determined by transmission electron microscopy.

## Patentansprüche

1. Eine wässrige Beschichtungszusammensetzung, umfassend:
(a) ein Basis-Latexharz und
(b) ein stratifizierendes Latexharz, das Hybrid-Metalloxid-Latexpartikel umfasst, wobei die Hybridpartikel das Polymerisationsreaktionsprodukt von wenigstens einem oder mehreren copolymerisierbaren monoethylenisch ungesättigten Monomeren sind, wobei die monoethylenisch ungesättigten Monomere wenigstens ein Driver-Monomer mit niedriger Oberflächenenergie umfassen, ausgewählt aus der Gruppe bestehend aus (i) einem fluorhaltigen Monomer und (ii) einem silanhaltigen Monomer, und wobei die Polymerisationsreaktion in Gegenwart eines Metalloxid-Nanopartikels stattfindet, und wobei das Metalloxid-Nanopartikel in den Hybridpartikeln eingebettet ist.

2. Die wässrige Beschichtungszusammensetzung nach Anspruch 1, wobei die Beschichtungszusammensetzung 2,5 Gew.-% bis 95 Gew.-% stratifizierendes Harz, vorzugsweise 25 Gew.-% bis 50 Gew.-% stratifizierendes Harz, oder 25 bis 35 Gew.-% stratifizierendes Harz umfasst, bezogen auf das Gesamtgewicht an Polymerfeststoffen.

3. Die wässrige Beschichtungszusammensetzung nach Anspruch 1 oder 2, wobei das wenigstens eine fluorhaltige Monomer die Formel: 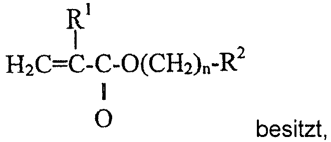 worin R¹ CH₃ oder H bedeutet, R² einen perfluorierten C₁-C₁₀-Alkylrest bedeutet und n ≤ 4.

4. Die wässrige Beschichtungszusammensetzung nach Anspruch 1, 2 oder 3, ferner umfassend wenigstens ein Monomer mit latenter Vernetzungsfunktionalität, wobei das latent vernetzende Monomer vorzugsweise ein Silanmonomer oder ein carbonylhaltiges Monomer ist.

5. Die wässrige Beschichtungszusammensetzung nach Anspruch 1, 2, 3 oder 4, wobei das Metalloxid-Nanopartikel ausgewählt ist aus der Gruppe bestehend aus Aluminiumoxid, Antimonzinnoxid, Wismutoxid, Ceroxid, Eisenoxid, Titandioxid, Zinkoxid und Mischungen davon.

6. Die wässrige Beschichtungszusammensetzung nach einem der Ansprüche 1 bis 5, wobei das stratifizierende Latexharz ferner wenigstens ein langkettiges Acrylatmonomer mit einer Alkyllänge von wenigstens 12 umfasst.

7. Die wässrige Beschichtungszusammensetzung nach Anspruch 1, wobei das stratifizierende Latexharz das Polymerisationsreaktionsprodukt von:
(a) 2 Gew.-% bis 24 Gew.-%, bezogen auf das Monomergesamtgewicht, eines fluorhaltigen Monomers,
(b) 2 Gew.-% bis 6 Gew.-%, bezogen auf das Monomergesamtgewicht, eines Monomers mit Silanfunktionalität und
(c) 1 Gew.-% bis 5 Gew.-%, bezogen auf das Monomergesamtgewicht, eines langkettigen Acrylatmonomers mit einer Alkyllänge von wenigstens 12 umfasst.

8. Die wässrige Beschichtungszusammensetzung nach einem der Ansprüche 1 bis 7, wobei das stratifizierende Latexharz ein Zwei-Phasen-Polymer ist, das durch sequentielle Polymerisation einer ersten Gruppe von Monomeren unter Bildung eines Polymers der ersten Phase und einer zweiten Gruppe von Monomeren unter Bildung eines Polymers der zweiten Phase gebildet wird.

9. Die wässrige Beschichtungszusammensetzung nach Anspruch 8, wobei das Zwei-Phasen-Polymer ein Weichsegment mit einer Tg von -35°C bis 10°C und ein Hartsegment mit einer Tg von 35°C bis 100°C umfasst.

10. Die wässrige Beschichtungszusammensetzung nach Anspruch 9, wobei das Polymer der ersten Phase das Weichsegment ist, oder wobei die Metalloxid-Hybridpartikel in dem Weichsegment eingebettet sind.

11. Die wässrige Beschichtungszusammensetzung nach Anspruch 6, wobei das Weichsegment das Polymerisationsreaktionsprodukt von:
(a) 2 Gew.-% bis 12 Gew.-%, bezogen auf das Monomergesamtgewicht, eines fluorhaltigen Monomers,
(b) 2 Gew.-% bis 6 Gew.-%, bezogen auf das Monomergesamtgewicht, eines Monomers mit Silanfunktionalität und
(c) 1 Gew.-% bis 5 Gew.-%, bezogen auf das Monomergesamtgewicht, eines langkettigen Acrylatmonomers mit einer Alkyllänge von wenigstens 12 umfasst.

12. Die wässrige Beschichtungszusammensetzung nach Anspruch 9, wobei das Hartsegment das Polymerisationsreaktionsprodukt von einem oder mehreren copolymerisierbaren monoethylenisch ungesättigten Monomeren, ausschließlich fluorhaltiger Monomere und langkettiger Acrylatmonomere mit einer Alkyllänge von wenigstens 10, umfasst.

13. Die wässrige Beschichtungszusammensetzung nach Anspruch 4, wobei das wenigstens eine Monomer mit latenter Vernetzungsfunktionalität ausgewählt ist aus Acrolein, Methacrolein, Diacetonacrylamid, Diacetonmethacrylamid, 2-Butanonmethacrylat, Formylstryrol, Diacetonacrylat, Diacetonmethacrylat, Acetonitrilacrylat, Acetoacetoxyethylmethacrylat, Acetoacetoxyethylacrylat und Vinylacetoacetat, oder wobei das wenigstens eine Monomer mit latenter Vernetzungsfunktionalität ausgewählt ist aus der Gruppe bestehend aus Methacryloyloxypropyltrimethoxysilan, Methacryloyloxypropyltriethoxysilan, Methacryloyloxypropyltripropoxysilan, Vinyltrimethoxysilan, Vinyltriethoxysilan, Vinylisopropoxysilan, Gamma-Aminotriethoxysilan, cycloaliphatischem Epoxytrimethoxysilan und Gamma-Methacryloxypropyltrimethoxysilan.

14. Die wässrige Beschichtungszusammensetzung nach Anspruch 4 oder 13, ferner umfassend:
eine wirksame vernetzende Menge eines Vernetzungsmittels für das stratifizierende Harz, wobei das Vernetzungsmittel vorzugsweise ausgewählt ist aus Di- und Polyaminen, Di- und Polyhydraziden und Di- und Polyhydrazinen und Mischungen davon.

15. Die wässrige Beschichtungszusammensetzung nach einem der Ansprüche 1 bis 14, wobei die Hybrid-Latexpartikel eine mittlere Partikelgröße zwischen 75 nm bis 500 nm besitzen, ermittelt durch Transmissionselektronenmikroskopie.

## Revendications

1. Composition de revêtement aqueuse comprenant :
(a) une résine latex de base ; et
(b) une résine latex stratifiante comprenant des particules hybrides latex - oxyde métallique, où les particules hybrides sont le produit de la réaction de polymérisation de un au moins ou de plusieurs monomères à insaturation monoéthylénique copolymérisables, les monomères à insaturation monoéthylénique comprenant au moins un monomère principal à faible énergie de surface sélectionné dans le groupe consistant en (i) un monomère contenant du fluor ; et (ii) un monomère contenant du silane ; la réaction de polymérisation étant effectuée en présence d'une nanoparticule d'un oxyde métallique ; et la nanoparticule d'un oxyde métallique étant encastrée dans les particules hybrides.

2. Composition de revêtement aqueuse de la revendication 1, où la composition de revêtement comprend de 2,5 % à 95 % en poids de la résine stratifiante, de préférence de 25 % à 50 % en poids de la résine stratifiante ou de 25 à 35 % en poids de la résine stratifiante, ces pourcentages étant rapportés au poids total des solides du polymère.

3. Composition de revêtement aqueuse de la revendication 1 ou 2, où le au moins un monomère contenant du fluor répond à la formule : 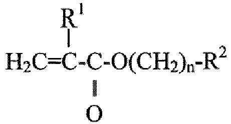 dans laquelle R¹ représente CH₃ ou H ; R² représente un radical (C₁-C₁₀)alkyle perfluoré ; et n ≤ 4.

4. Composition de revêtement aqueuse de la revendication 1, 2 ou 3 comprenant en outre au moins un monomère ayant une fonctionnalité à réticulation latente, ledit monomère à réticulation latente étant de préférence un monomère silane ou un monomère contenant un carbonyle.

5. Composition de revêtement aqueuse de la revendication 1, 2, 3 ou 4, où la nanoparticule d'un oxyde métallique est sélectionnée dans le groupe consistant en l'oxyde d'aluminium, l'oxyde d'antimoine dopé à l'étain, l'oxyde de bismuth, l'oxyde de cérium, l'oxyde de fer, le dioxyde de titane, l'oxyde de zinc et des mélanges de ceux-ci.

6. Composition de revêtement aqueuse de l'une quelconque des revendications 1 à 5, où la résine latex stratifiante comprend en outre au moins un monomère acrylate à chaîne longue dont une longueur de la chaîne alkyle est de 12 au moins.

7. Composition de revêtement aqueuse de la revendication 1, où la résine latex stratifiante comprend le produit de la réaction de polymérisation de :
(a) 2 % à 24 % en poids, rapportés au poids total des monomères, d'un monomère contenant du fluor ;
(b) 2 % à 6 % en poids, rapportés au poids total des monomères, d'un monomère ayant une fonctionnalité silane ; et
(c) 1 % à 5 % en poids, rapportés au poids total des monomères, d'un monomère acrylate à chaîne longue dont une longueur de la chaîne alkyle est de 12 au moins.

8. Composition de revêtement aqueuse de l'une quelconque des revendications 1 à 7, où la résine latex stratifiante est un polymère formé en deux étapes par polymérisation de façon séquentielle d'un premier groupe de monomères pour former un polymère de première étape et d'un deuxième groupe de monomères pour former un polymère de deuxième étape.

9. Composition de revêtement aqueuse de la revendication 8, où le polymère formé en deux étapes comprend un segment mou ayant une Tg qui va de -35 °C à 10 °C et un segment dur ayant une Tg qui va de 35 °C à 100 °C.

10. Composition de revêtement aqueuse de la revendication 9, où le polymère de première étape est le segment mou ou où les particules hybrides d'un oxyde métallique sont encastrées dans le segment mou.

11. Composition de revêtement aqueuse de la revendication 6, où le segment mou comprend le produit de la réaction de polymérisation de :
(a) 2 % à 12 % en poids, rapportés au poids total des monomères, d'un monomère contenant du fluor ;
(b) 2 % à 6 % en poids, rapportés au poids total des monomères, d'un monomère ayant une fonctionnalité silane ; et
(c) 1 % à 5 % en poids, rapportés au poids total des monomères, d'un monomère acrylate à chaîne longue dont une longueur de la chaîne alkyle est de 12 au moins.

12. Composition de revêtement aqueuse de la revendication 9, où le segment dur comprend le produit de la réaction de polymérisation de un ou plusieurs monomères à insaturation monoéthylénique copolymérisables autres que des monomères contenant du fluor et des monomères acrylates à chaîne longue dont une longueur de la chaîne alkyle est de 12 au moins.

13. Composition de revêtement aqueuse de la revendication 4, où le au moins un monomère ayant une fonctionnalité à réticulation latente est sélectionné parmi les suivants : acroléine, méthacroléine, diacétone-acrylamide, diacétone-méthacrylamide, méthacrylate de 2-butanone, formyl styrol, diacétone-acrylate, diacétone-méthacrylate, acétonitrile-acrylate, méthacrylate d'acétoacétoxyéthyle, acrylate d'acétoacétoxyéthyle et acétoacétate de vinyle, ou où le au moins un monomère ayant une fonctionnalité à réticulation latente est sélectionné dans le groupe consistant en les suivants : méthacryloyloxypropyl(triméthoxysilane), méthacryloyloxypropyl(triéthoxysilane), méthacryloyloxypropyltris(propoxysilane), vinyl(triméthoxysilane), vinyl(triéthoxysilane), vinyl(isopropoxysilane), gamma-amino(triéthoxysilane), époxy(triméthoxysilane) cycloaliphatique et gamma- méthacryloxypropyl(triméthoxysilane).

14. Composition de revêtement aqueuse de la revendication 4 ou 13 comprenant en outre :
une quantité efficace en termes de réticulation d'un agent réticulant pour la résine stratifiante, où l'agent de réticulation est de préférence sélectionné parmi des di- et des polyamines, des di- et des polyhydrazides, des di- et des polyhydrazines et des mélanges de ceux-ci.

15. Composition de revêtement aqueuse de l'une quelconque des revendications 1 à 14, où les particules de latex hybrides ont une dimension particulaire moyenne entre 75 nm et 500 nm, comme déterminé par microscopie électronique à transmission.
